# EUROPEAN PATENT APPLICATION

(11) **EP 4 657 620 A1**
(43) Date of publication of application: **03.12.2025**
(21) Application number: 23918594.5
(22) Date of filing: 14.12.2023
(51) Int. Cl.: H01M 50/15, H01M 50/105, H01M 50/169

(54) **BATTERY CELL AND METHOD FOR PRODUCING BATTERY CELL**

(30) Priority: 25.01.2023 JP 2023009501
(71) Applicant: AESC Japan Ltd., Yokohama-Shi, Kanagawa 220-0012 (JP)
(72) Inventor: Nakai, Masayuki, Zama-shi, Kanagawa 252-0012 (JP)
(74) Representative: Mathys & Squire
(86) International application number: PCT/JP2023/044793
(87) International publication number: WO 2024/157639

(57) **Abstract**

A battery cell (10) includes a battery element (100), a front lid member (210) covering an end part of the battery element (100), and an exterior film (300) wound around the battery element (100) and the front lid member (210). The front lid member (210) includes a front protrusion (212) protruding toward a side opposite to the battery element (100) of the front lid member (210). The front protrusion (212) and the exterior film (300) are at least partially bonded to each other.

## Description

### TECHNICAL FIELD

The present invention relates to a battery cell and a method of manufacturing a battery cell.

### BACKGROUND ART

In recent years, various structures of battery cells such as lithium ion secondary battery cells have been developed. The battery cell described in Patent Document 1, for example, includes a battery element, two lid members, and an exterior film. The two lid members cover longitudinally opposite end parts of the battery element. The exterior film is wound around the longitudinal direction of the battery element.

### RELATED DOCUMENT

### PATENT DOCUMENT

Patent Document 1: Pamphlet of International Publication No. WO 2021/157731

### SUMMARY OF THE INVENTION

### TECHNICAL PROBLEM

In the battery cell described in Patent Document 1, for example, the lid member and the exterior film may be bonded to each other by thermal welding. Simply applying the heat to the lid member and the exterior film may, however, make it difficult to achieve sufficiently high bonding strength between the lid member and the exterior film. When the bonding strength between the lid member and the exterior film is insufficient, the improvement in sealing of the battery cell may be difficult.

An example of the object of the present invention is to improve the sealing of a battery cell. Other objects of the present invention will become apparent from the description of the present specification.

### SOLUTION TO PROBLEM

An aspect of the present invention is as follows.
[1] A battery cell including:
   a battery element;
   a lid member covering an end part of the battery element; and
   an exterior film wound around the battery element and the lid member,
   in which the lid member includes a protrusion protruding toward a side opposite to the battery element of the lid member, and
   the protrusion and the exterior film are at least partially bonded to each other.
[2] The battery cell according to [1], in which the protrusion at least partially surrounds a predetermined region located on a side opposite to the battery element with respect to the lid member.
[3] The battery cell according to [1] or [2], in which a melted portion of at least one of the protrusion and the exterior film is at least partially present between the protrusion and the exterior film.
[4] A method of manufacturing a battery cell, including:
   a step of winding an exterior film around a battery element and a lid member covering an end part of the battery element, the lid member including a protrusion protruding toward a side opposite to the battery element; and
   a step of at least partially bonding the protrusion and the exterior film.
[5] The method of manufacturing a battery cell according to [4], in which the step of at least partially bonding the protrusion and the exterior film includes a step of applying heat from a portion of the exterior film opposite to the protrusion and a portion of the protrusion opposite to the exterior film.

### ADVANTAGEOUS EFFECTS OF INVENTION

According to the aspect described above of the present invention, the sealing of the battery cell can be improved.

### BRIEF DESCRIPTION OF THE DRAWINGS

[FIG. 1] A front perspective view of a battery cell according to an embodiment.
[FIG. 2] An enlarged front perspective view of a portion of the battery cell according to the embodiment.
[FIG. 3] A front view of the battery cell according to the embodiment.
[FIG. 4] A right side view of the battery cell according to the embodiment.

### DESCRIPTION OF EMBODIMENTS

Hereinafter, an embodiment of the present invention will be described with reference to the drawings. In all drawings, the same constituent elements are denoted by the same reference signs, and detailed description thereof will not be repeated.

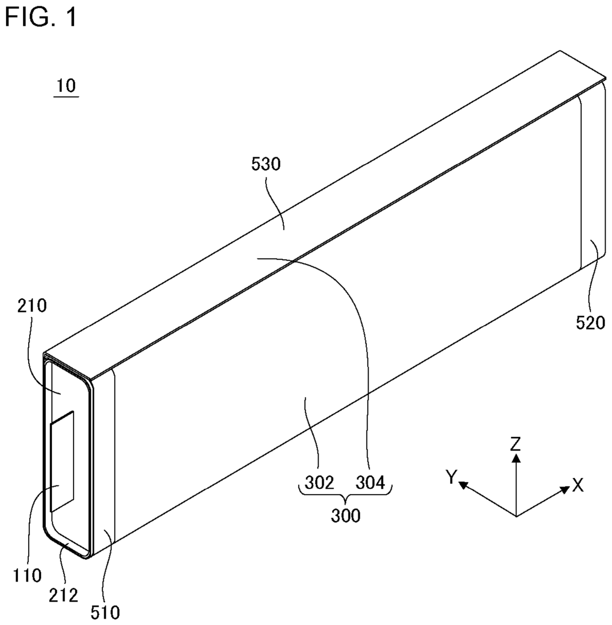

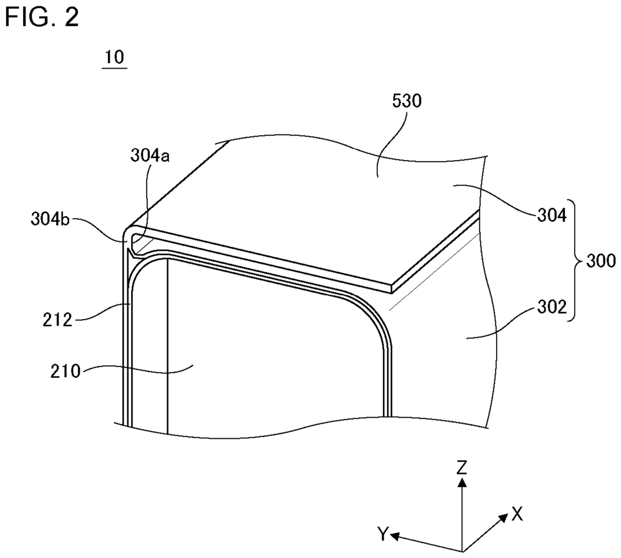

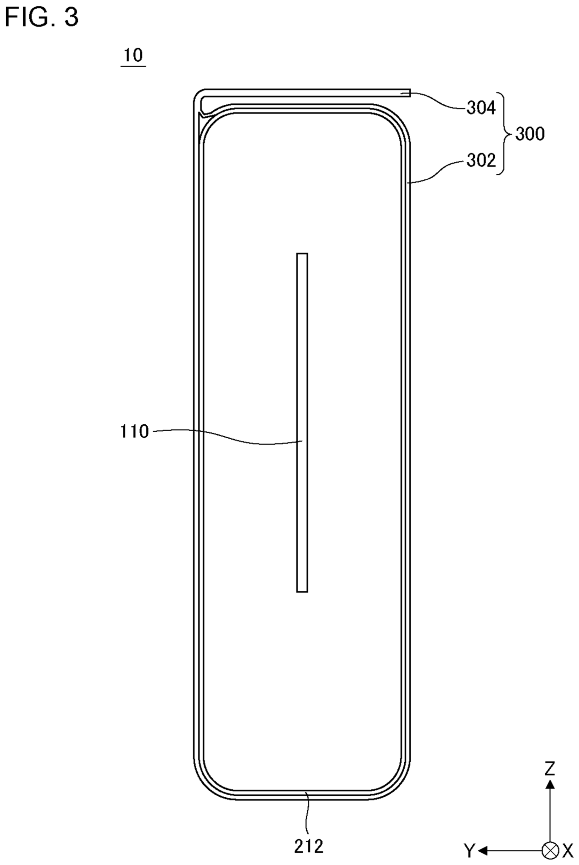

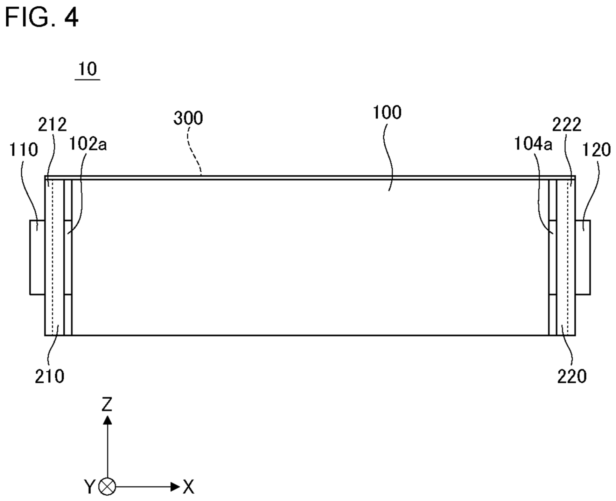

FIG. 1 is a front perspective view of a battery cell 10 according to the embodiment. FIG. 2 is an enlarged front perspective view of a portion of the battery cell 10 according to the embodiment. FIG. 3 is a front view of the battery cell 10 according to the embodiment. FIG. 4 is a right side view of the battery cell 10 according to the embodiment. In FIG. 4, for the sake of description, the exterior film 300 described below is shown as transparent. In FIG. 4, for the sake of description, a proximal end, that is, a rear end, of a front protrusion 212 described later, and a proximal end, that is, a front end, of a rear protrusion 222 described later, are shown by broken lines.

In each figure, the X direction, the Y direction, and the Z direction are attached for description. The X direction indicates a front-rear direction of the battery cell 10. The Y direction is orthogonal to the X direction. The Y direction indicates a left-right direction of the battery cell 10. The Z direction is orthogonal to both the X direction and the Y direction. The Z direction indicates an up-down direction of the battery cell 10. The direction indicated by an arrow indicating the X direction, the direction indicated by an arrow indicating the Y direction, and the direction indicated by an arrow indicating the Z direction are a rear direction, a left direction, and an upper direction, respectively. However, the relationship between the X direction, the Y direction, the Z direction, the front-rear direction, the left-right direction, and the up-down direction of the battery cell 10 is not limited to this example.

The white circle with X indicating the X direction, the Y direction, or the Z direction indicates that the direction extending from the front side toward the back side of the drawing sheet corresponds to the direction pointed by the arrow representing the direction.

The battery cell 10 comprises a battery element 100, a positive electrode tab 110, a negative electrode tab 120, a front lid member 210, a rear lid member 220, and an exterior film 300. The exterior film 300 has a wound portion 302 and a drawn portion 304.

The battery element 100 has a substantially rectangular parallelepiped shape. The longitudinal direction of the battery element 100 is substantially parallel to the X direction. The length of the battery element 100 in the X direction is, for example, but is not limited to, 300 mm or greater and 500 mm or less, and preferably 450 mm or less. The lateral direction of the battery element 100 is substantially parallel to the Z direction. The length of the battery element 100 in the Z direction is, for example, but is not limited to, 90 mm or greater and 130 mm or less, and preferably 120 mm or less. The thickness direction of the battery element 100 is substantially parallel to the Y direction. The thickness of the battery element 100 in the Y direction is for example, but is not limited to, 20 mm or greater and 50 mm or less, and preferably 45 mm or less. However, the shape of the battery element 100 is not limited to this example.

The battery element 100 has at least one unillustrated positive electrode, at least one unillustrated negative electrode, and at least one unillustrated separator. For example, a plurality of positive electrodes and a plurality of negative electrodes are alternately stacked in the Y direction. At least a part of the separator is positioned between the positive electrode and the negative electrode adjacent to each other in the Y direction. For example, each of a plurality of separators having a sheet shape may be positioned between the positive electrode and the negative electrode adjacent to each other in the Y direction. Alternatively, one separator having a sheet shape may have a zigzag shape that passes through a region between the positive electrode and the negative electrode adjacent to each other in the Y direction. Alternatively, the positive electrode, the negative electrode, and the separator may be wound such that the separator is disposed between the positive electrode and the negative electrode. **In** one example, the positive electrode, the negative electrode, and the separator are wound with both surfaces of one of the positive electrode and the negative electrode covered with the separator. **In** another example, a stack including a plurality of unit stacks each including a positive electrode, a separator, and a negative electrode in this order may be wound. However, the winding structure of the positive electrode, the negative electrode, and the separator is not limited to these examples.

In the embodiment, the battery cell 10 is a battery cell containing an electrolytic solution. However, the battery cell 10 may be an all-solid state battery. In the all-solid state battery, a solid electrolyte layer is provided in a portion corresponding to a separator. The all-solid state battery does not contain an electrolytic solution. Hereinafter, unless otherwise specified, the battery cell 10 will be described as a battery cell containing an electrolytic solution.

As shown in FIG. 4, the positive electrode tab 110 is disposed in front of the battery element 100. The rear end part of the positive electrode tab 110 is electrically connected to the positive electrode current collector 102a. The positive electrode current collector 102a is drawn forward from the positive electrode 102. As a result, the positive electrode tab 110 is electrically connected to a plurality of positive electrodes 102.

As shown in FIG. 4, the negative electrode tab 120 is disposed behind the battery element 100. The front end part of the negative electrode tab 120 is electrically connected to the negative electrode current collector 104a. The negative electrode current collector 104a is drawn rearward from the negative electrode 104. As a result, the negative electrode tab 120 is electrically connected to a plurality of negative electrodes 104.

The front lid member 210 covers the front end part of the battery element 100. The front lid member 210 is made of a resin, a metal, or the like, for example. The front end part of the positive electrode tab 110 protrudes from the front surface of the front lid member 210. As viewed from the front, the front lid member 210 has a substantially rectangular shape with rounded four corners around the X direction. As viewed from the front, the longitudinal direction of the front lid member 210 is substantially parallel to the Z direction, and the lateral direction of the front lid member 210 is substantially parallel to the Y direction. The four corners around the X direction of the front lid member 210 are aligned in the X direction with the four corners around the X direction of the battery element 100.

As shown in FIGS. 1 to 4, the front lid member 210 has a front protrusion 212. The front protrusion 212 protrudes toward a side of the front lid member 210 opposite to the battery element 100. That is, the front protrusion 212 protrudes forward of the front lid member 210. In the embodiment, as viewed from the front, the front protrusion 212 at least partially surrounds a predetermined region in front of the front lid member 210 around the X direction. In the embodiment, the positive electrode tab 110 is positioned in the predetermined region. In the example shown in FIG. 3, as viewed from the front, the front protrusion 212 continuously extends along the entire outer peripheral surface around the X direction of the front lid member 210. In other words, the front protrusion 212 forms a recess portion open frontward on the front surface of the front lid member 210. However, as viewed from the front, the front protrusion 212 may be at least partially interrupted on the outer peripheral surface around the X direction of the front lid member 210.

The rear lid member 220 covers the rear end part of the battery element 100. The rear lid member 220 is made of a resin, a metal, or the like, for example. The rear end part of the negative electrode tab 120 protrudes from the rear surface of the rear lid member 220. As viewed from the rear, the rear lid member 220 has a substantially rectangular shape with rounded four corners around the X direction. As viewed from the rear, the longitudinal direction of the rear lid member 220 is substantially parallel to the Z direction, and the lateral direction of the rear lid member 220 is substantially parallel to the Y direction. The four corners around the X direction of the rear lid member 220 are aligned in the X direction with the four corners around the X direction of the battery element 100.

As shown in FIG. 4, the rear lid member 220 has a rear protrusion 222. The rear protrusion 222 protrudes rearward of the rear lid member 220. As viewed from the rear, the rear protrusion 222 at least partially surrounds a predetermined rear region of the rear lid member 220 around the X direction in the same way as the front protrusion 212. In the embodiment, the negative electrode tab 120 is positioned in the predetermined region.

As shown in FIG. 1 and FIG. 2, the wound portion 302 has a substantially tubular shape open both forward and rearward. The front lid member 210 is disposed inside the front opening of the wound portion 302. The rear lid member 220 is disposed inside the rear opening of the wound portion 302. The wound portion 302 is wound once around the X direction of the battery element 100, the front lid member 210, and the rear lid member 220. As shown in FIG. 4, therefore, the front lid member 210, the rear lid member 220, and the wound portion 302 form an accommodation space 500 that accommodates the battery element 100. An electrolytic solution, not illustrated, is accommodated in the accommodation space 500 together with the battery element 100. The state of winding of the battery element 100 in the wound portion 302 is not limited to the example described above.

The outer peripheral surface of the front lid member 210 around the X direction including the outer peripheral surface of the front protrusion 212 around the X direction and an inner peripheral surface of the front opening of the wound portion 302 around the X direction are bonded to each other by thermal welding. As a result, a front sealing portion 510 is formed in front of the accommodation space 500.

The outer peripheral surface of the rear lid member 220 around the X direction including the outer peripheral surface of the rear protrusion 222 around the X direction and the inner peripheral surface of the wound portion 302 around the X direction of the rear opening are bonded to each other by thermal welding. As a result, a rear sealing portion 520 is formed behind the accommodation space 500.

As shown in FIG. 1 and FIG. 2, the drawn portion 304 is drawn from the upper left corner of the battery element 100 of the wound portion 302 as viewed from the front. Specifically, as shown in FIG. 2, the drawn portion 304 includes a first drawn portion 304a and a second drawn portion 304b. The first drawn portion 304a is drawn from one end of opposite ends in a circumferential direction around the X direction of the wound portion 302. The second drawn portion 304b is drawn from the other end of the opposite ends in the circumferential direction around the X direction of the wound portion 302. The first drawn portion 304a and the second drawn portion 304b are bonded to each other by thermal welding, for example. As a result, a side sealing portion 530 is formed on the upper side of the accommodation space 500 as viewed from the front. The drawn portion 304 is bent along the upper surface of the battery element 100. However, the drawn portion 304 may not be bent. In addition, the bending shape of the drawn portion 304 is not limited to the shape according to the embodiment.

**In** the embodiment, the outer peripheral surface around the X direction of the front protrusion 212 and the inner peripheral surface around the X direction of the front opening of the wound portion 302 are at least partially bonded to each other by thermal welding. For example, the entire outer peripheral surface around the X direction of the front protrusion 212 and the entire inner peripheral surface around the X direction of the front opening of the wound portion 302 are bonded to each other by thermal welding. **In** this thermal welding, the heat can be applied to the bonding portion between the front protrusion 212 and the wound portion 302 from at least one side of the inner peripheral surface around the X direction of the front protrusion 212 and the outer peripheral surface around the X direction of the front opening of the wound portion 302. As a result, the melted portion of at least one of the front protrusion 212 and the wound portion 302 may be formed at least partially between the outer peripheral surface around the X direction of the front protrusion 212 and the inner peripheral surface around the X direction of the front opening of the wound portion 302 by the thermal welding. **In** one example, the melted portion of at least one of the front protrusion 212 and the wound portion 302 may be formed over the entire region between the outer peripheral surface around the X direction of the front protrusion 212 and the inner peripheral surface around the X direction of the front opening of the wound portion 302. For example, the heat can be applied to the bonding portion between the front protrusion 212 and the wound portion 302 above the positive electrode tab 110 from the lower surface of the front protrusion 212 above the positive electrode tab 110 and the upper surface of the wound portion 302 above the positive electrode tab 110. As a result, the heat can be easily applied to the bonding portion between the outer peripheral surface around the X direction of the front protrusion 212 and the inner peripheral surface around the X direction of the front opening of the wound portion 302, as compared with the case where the heat is simply applied from the upper surface of the wound portion 302 above the positive electrode tab 110 and the lower surface of the wound portion 302 below the positive electrode tab 110. Accordingly, the bonding strength between the front protrusion 212 and the wound portion 302 can be easily increased as compared with the case described above. As a result, the sealing of the battery cell 10 can be improved as compared with the case described above.

In the embodiment, as viewed from the front, the front protrusion 212 at least partially surrounds a predetermined region in front of the front lid member 210 around the X direction. As a result, the bonding area between the outer peripheral surface around the X direction of the front protrusion 212 and the inner peripheral surface around the X direction of the front opening of the wound portion 302 can be increased as compared with the case where the front protrusion 212 is positioned, for example, only above, below, to the left of, or to the right of the positive electrode tab 110. Accordingly, the sealing of the battery cell 10 can be improved as compared with the case described above. However, the front protrusion 212 may be positioned, for example, only above, only below, only to the left, or only to the right of the positive electrode tab 110.

In the embodiment, the outer peripheral surface around the X direction of the front lid member 210 and the outer peripheral surface around the X direction of the front protrusion 212 are substantially flush with each other. As a result, the wound portion 302 can be easily bonded to both the outer peripheral surface around the X direction of the front lid member 210 and the outer peripheral surface around the X direction of the front protrusion 212, as compared with the case where there is a step between the outer peripheral surface around the X direction of the front lid member 210 and the outer peripheral surface around the X direction of the front protrusion 212. However, there may be a step between the outer peripheral surface of around the X direction of the front lid member 210 and the outer peripheral surface around the X direction of the front protrusion 212.

In the embodiment, the description of the bonding of the outer peripheral surface around the X direction of the front protrusion 212 and the inner peripheral surface around the X direction of the front opening of the wound portion 302 can be similarly applied to the bonding of the outer peripheral surface around the X direction of the rear protrusion 222 and the inner peripheral surface around the X direction of the rear opening of the wound portion 302. One of the front protrusion 212 and the rear protrusion 222 may not be provided. For example, the front lid member 210 may have the front protrusion 212 and the rear lid member 220 may not have the rear protrusion 222.

Next, an example of a method of manufacturing the battery cell 10 according to the embodiment will be described. In this example, the battery cell 10 is manufactured as follows.

First, the battery element 100 is manufactured. The battery element 100 has at least one positive electrode, at least one negative electrode, and at least one separator.

Next, the positive electrode tab 110 and the front lid member 210 are bonded to each other. In the same manner, the negative electrode tab 120 and the rear lid member 220 are bonded to each other. Next, the positive electrode tab 110 and the positive electrode current collector 102a are bonded to each other. In the same manner, the negative electrode tab 120 and the negative electrode current collector 104a are bonded to each other. However, after bonding the positive electrode tab 110 and the positive electrode current collector 102a to each other, the positive electrode tab 110 and the front lid member 210 may be bonded to each other. Similarly, after bonding the negative electrode tab 120 and the negative electrode current collector 104a to each other, the negative electrode tab 120 and the rear lid member 220 may be bonded to each other.

Next, the exterior film 300 is wound once around the X direction of the battery element 100. The wound portion 302 is formed accordingly. In addition, the excess length of the exterior film 300 is drawn as the drawn portion 304.

Next, the outer peripheral surface around the X direction of the front lid member 210 including the outer peripheral surface around the X direction of the front protrusion 212 and the inner peripheral surface around the X direction of the front opening of the wound portion 302 are bonded to each other by thermal welding. The front sealing portion 510 is formed accordingly. For example, the front protrusion 212 and the wound portion 302 are thermally welded to each other by a seal bar disposed in a region surrounded by the inner peripheral surface around the X direction of the front protrusion 212 and a seal bar disposed outside the outer peripheral surface around the X direction of the front opening of the wound portion 302. In this example, the heat can be applied from the outer peripheral surface around the X direction of the front opening of the wound portion 302 and the inner peripheral surface around the X direction of the front protrusion 212. That is, the heat can be applied from a portion of the front opening of the wound portion 302 opposite to the front protrusion 212 and a portion of the front protrusion 212 opposite to the front opening of the wound portion 302. In this example, the heat can be easily applied to the bonding portion between the front lid member 210 and the wound portion 302, as compared with the case where the front lid member 210 and the wound portion 302 are simply thermally welded to each other by a seal bar disposed above the wound portion 302 above the positive electrode tab 110 and a seal bar disposed below the wound portion 302 below the positive electrode tab 110. As a result, the bonding strength between the front lid member 210 and the wound portion 302 can be increased as compared with the case described above.

Next, the outer peripheral surface around the X direction of the rear lid member 220 including the outer peripheral surface around the X direction of the rear protrusion 222 and the inner peripheral surface around the X direction of the rear opening of the wound portion 302 are bonded to each other by thermal welding. The rear sealing portion 520 is formed accordingly. For example, the rear protrusion 222 and the wound portion 302 are thermally welded to each other by a seal bar disposed in a region surrounded by an inner peripheral surface around the X direction of the rear protrusion 222 and a seal bar disposed outside an outer peripheral surface around the X direction of the rear opening of the wound portion 302. In this example, the heat can be applied from the outer peripheral surface around the X direction of the rear opening of the wound portion 302 and the inner peripheral surface around the X direction of the rear protrusion 222. That is, the heat can be applied from a portion of the rear opening of the wound portion 302 opposite to the rear protrusion 222 and a portion of the rear protrusion 222 opposite to the rear opening of the wound portion 302. In this example, the heat can be easily applied to the bonding portion between the rear lid member 220 and the wound portion 302, as compared with the case where the rear lid member 220 and the wound portion 302 are thermally welded to each other by a seal bar disposed above the wound portion 302 above the negative electrode tab 120 and a seal bar disposed below the wound portion 302 below the negative electrode tab 120. As a result, the bonding strength between the rear lid member 220 and the wound portion 302 can be increased as compared with the case described above.

Next, the electrolytic solution is injected into the accommodation space 500 through a gap between the first drawn portion 304a and the second drawn portion 304b. Next, the accommodation space 500 is vacuumed through the gap between the first drawn portion 304a and the second drawn portion 304b. Next, the first drawn portion 304a and the second drawn portion 304b are bonded to each other by thermal welding to form the side sealing portion 530. The accommodation space 500 is vacuum-sealed accordingly.

The method of vacuum-sealing the accommodation space 500 is not limited to the example described above. In another example, first, the first drawn portion 304a and the second drawn portion 304b are bonded by thermal welding to form the side sealing portion 530. Next, the electrolytic solution is injected into the accommodation space 500 through a liquid injection hole provided in at least one of the front lid member 210 and the rear lid member 220. Next, the accommodation space 500 is vacuumed through the liquid injection hole. Next, the liquid injection hole is closed with a predetermined lid member.

Next, the side sealing portion 530 is bent along the upper surface of the battery element 100.

Thus, the battery cell 10 is manufactured.

Hereinabove, the embodiments of the present invention have been described with reference to the drawings. However, the embodiment is merely an example of the present invention, and various configurations other than the configurations described above can also be adopted.

In the embodiment, for example, the positive electrode tab 110 and the negative electrode tab 120 are disposed on opposite sides of the battery element 100 in the X direction. However, both the positive electrode tab 110 and the negative electrode tab 120 may be disposed only on one of the front side and the rear side of the battery element 100 in the X direction. In this case, the front end part and the rear end part of the battery element 100 are covered with two lid members, for example. Alternatively, only the side from which the positive electrode tab 110 and the negative electrode tab 120 of the battery element 100 are led out may be covered with the lid member. In this example, the exterior film 300 may be sealed and folded along the battery element 100 on the side of the battery element 100 opposite to the lid member.

This application claims priority based on Japanese Patent Application No. 2023-009501 filed January 25, 2023, the disclosure of which is incorporated herein in its entirety by reference.

### REFERENCE SIGNS LIST

10 battery cell, 100 battery element, 102 positive electrode, 102a positive electrode current collector, 104 negative electrode, 104a negative electrode current collector, 110 positive electrode tab, 120 negative electrode tab, 210 front lid member, 212 front protrusion, 220 rear lid member, 222 rear protrusion, 300 exterior film, 302 wound portion, 304 drawn portion, 304a first drawn portion, 304b second drawn portion, 500 accommodation space, 510 front sealing portion, 520 rear sealing portion, 530 side sealing portion

## Claims

1. A battery cell comprising:
a battery element;
a lid member covering an end part of the battery element; and
an exterior film wound around the battery element and the lid member,
wherein the lid member includes a protrusion protruding toward a side opposite to the battery element of the lid member, and
the protrusion and the exterior film are at least partially bonded to each other.

2. The battery cell according to Claim 1,
wherein the protrusion at least partially surrounds a predetermined region located on a side opposite to the battery element with respect to the lid member.

3. The battery cell according to Claim 1 or 2,
wherein a melted portion of at least one of the protrusion and the exterior film is at least partially present between the protrusion and the exterior film.

4. A method of manufacturing a battery cell, comprising:
a step of winding an exterior film around a battery element and a lid member covering an end part of the battery element, the lid member including a protrusion protruding toward a side opposite to the battery element; and
a step of at least partially bonding the protrusion and the exterior film.

5. The method of manufacturing a battery cell according to Claim 4,
wherein the step of at least partially bonding the protrusion and the exterior film includes a step of applying heat from a portion of the exterior film opposite to the protrusion and a portion of the protrusion opposite to the exterior film.
